**Europäisches Patentamt**

(19) **European Patent Office**

**Office européen des brevets**

(11) Veröffentlichungsnummer: **0 027 552**
**B1**

(12) **EUROPÄISCHE PATENTSCHRIFT**

(45) Veröffentlichungstag der Patentschrift:
01.12.82

(51) Int. Cl.³: **F 42 B 31/00,** B 29 F 1/10

(21) Anmeldenummer: **80105629.2**

(22) Anmeldetag: **19.09.80**

(54) **Verfahren zur Herstellung von durchrutschenden Führungsbändern und Geschossen mit derartigen Führungsbändern.**

(30) Priorität: **17.10.79 DE 2941920**

(43) Veröffentlichungstag der Anmeldung:
**29.04.81 Patentblatt 81/17**

(45) Bekanntmachung des Hinweises auf die Patenterteilung:
**01.12.82 Patentblatt 82/48**

(84) Benannte Vertragsstaaten:
**DE FR GB SE**

(56) Entgegenhaltungen:
**DE-A-2 300 589**
**DE-A-2 355 273**
**DE-A-2 758 692**
**DE-B-1 004 973**
**FR-A-1 298 756**
**FR-A-2 408 445**
**GB-A-630 414**
**GB-A-1 515 869**
**LU-A-33 896**
**US-A-2 310 915**
**US-A-3 098 263**
**US-A-3 786 760**
**US-A-3 910 194**

(73) Patentinhaber: **Rheinmetall GmbH, Ulmenstrasse 125, D-4000 Düsseldorf (DE)**

(72) Erfinder: **Hagedorn, Klaus, Dipl.-Ing., An den Quellen 46, D-5102 Würselen (DE)**

(74) Vertreter: **Behrens, Ralf Holger, Dipl.-Phys., Ulmenstrasse 125, D-4000 Düsseldorf (DE)**

(56) Entgegenhaltungen:
**NAVY TECHNICAL DISCLOSURE BULLETIN Band 3, Nr. 7, Juli 1978, Naval Weapons Center, China Lake, Calif. US, R.T. TROVINGER: "Two-piece slip-obturator band", Seiten 17–19**

Verfahren zur Herstellung von durchrutschenden Führungsbändern und Geschossen mit derartigen Führungsbändern

Die Erfindung betrifft ein Verfahren zur Herstellung von durchrutschenden Führungsbändern aus verformbarem Werkstoff für flügelstabilisierte Geschosse, bei denen das Führungsband in einer Führungsbandnut angeordnet wird, sowie mit einem derartigen durchrutschenden Führungsband versehene flügelstabilisierte Geschosse für glatte und gezogene Rohre.

Flügelstabilisierte Geschosse dieser Art mit durchrutschenden Führungsbändern sind beispielsweise aus der DE-A-25 51 389 bekannt. Dabei geht es im wesentlichen darum, den Geschossdrall so weit wie möglich zu reduzieren, damit das Geschoss möglichst mit optimaler Durchschlagskraft sein Ziel erreicht. Allerdings ergibt sich in der Praxis die Schwierigkeit, dass derartige Führungsbänder eine hohe Massgenauigkeit erfordern, und zwar sowohl hinsichtlich der Führungsbandnut als auch des Führungsbandes selbst.

Man hat bereits daran gedacht, einstückige Führungsbänder zu verwenden, die in die Führungsbandnut eingesetzt werden, allerdings war es zu diesem Zweck bislang erforderlich, dass der Geschosskörper im Bereich der Führungsbandnut geteilt war, damit das Führungsband vor dem Zusammenschrauben der beiden Geschosshälften eingesetzt werden konnte.

In der DE-A-25 51 389 ist eine Anordnung angegeben, bei der ein einstückiger Geschosskörper Verwendung findet, während das Führungsband aus mehreren Segmenten besteht, die durch eine Transportsicherung zusammengehalten werden. Dabei kann die Transportsicherung dort in verschiedener Weise ausgebildet sein, beispielsweise als separater Ring oder als Hülsenmund einer Patronenhülse, oder aber unter Verwendung einer Gleitbüchse, welche die Segmente des Führungsbandes aufnimmt und haltert. Das Führungsband selbst besteht dort aus Sintermetall.

Eine derartige Anordnung hat sich zwar in vielen Fällen als zufriedenstellend erwiesen, weil das aus Segmenten bestehende Führungsband nach Verlassen eines Geschützrohres frei ist und zu Boden fallen kann, jedoch besteht weiterhin das Bedürfnis, ein einstückiges Führungsband zu verwenden, um auf diese Weise die Herstellung von einzelnen Segmenten für das Führungsband vermeiden und den Herstellungsvorgang vereinfachen zu können.

Der Erfindung liegt daher die Aufgabe zugrunde, ein Verfahren zur Herstellung von durchrutschenden Führungsbändern, sowie Geschosse mit derartigen Führungsbändern anzugeben, die einen einfachen Herstellungsvorgang und gleichzeitig die Verwendung eines ungeteilten Geschosskörpers ermöglichen.

Die erfindungsgemässe Lösung besteht darin, ein Verfahren der angegebenen Art so zu führen, dass folgende Verfahrensschritte ausgeführt werden: Einspannen des Geschosses in ein Spritzgiesswerkzeug, direktes Einspritzen von Kunststoff als Führungsbandwerkstoff in den von der Führungsbandnut und dem Spritzgiesswerkzeug gebildeten Ringraum durch eine Vielzahl von gleichmässig über den Umfang verteilten Punktanschnitten und Einstellen und Aufrechterhalten eines Temperaturgradienten zwischen Geschoss und Spritzgiesswerkzeug, so dass das Spritzgiesswerkzeug wesentlich kälter als das Geschoss ist. Mit dem erfindungsgemässen Verfahren wird in vorteilhafter Weise erreicht, dass ein einstückiger Geschosskörper mit einem einstückigen Führungsband hergestellt werden kann, wobei das Material des Führungsbandes verstärkt am Spritzgiesswerkzeug abkühlt, sich unter Ablösung vom Geschosskörper ein Spalt zwischen Führungsband und Führungsbandnut bildet und damit ein durchrutschendes Führungsband entsteht, wenn das Führungsband Raumtemperatur erreicht hat. Da das Einspritzen des Kunststoffmaterials durch eine Vielzahl von Punktanschnitten erfolgen kann, können sich im Bereich zwischen jeweils zwei Punktanschnitten Bindenähte ausbilden, die verringerte mechanische Festigkeit besitzen und somit Sollbruchstellen für das Führungsband bilden.

Wenn in weiterer Ausgestaltung des erfindungsgemässen Verfahrens das Geschoss mit kleinen Kontaktflächen in das Spritzgiesswerkzeug eingespannt wird oder zur Halterung des Geschosses eine Wärmedämmschicht zwischen Geschoss und Spritzgiesswerkzeug angeordnet wird, so wird damit in vorteilhafter Weise erreicht, dass ein möglichst kleiner Wärmefluss zwischen dem Spritzgiesswerkzeug und dem Geschoss selbst stattfindet, während man das Führungsband auskühlen lässt, um die Spaltbildung zwischen Führungsband und Führungsbandnut zu unterstützen.

Wird in weiterer Ausbildung des erfindungsgemässen Verfahrens vor dem Einspritzen des Kunststoffes in den Ringraum zwischen Spritzgiesswerkzeug und Führungsbandnut eine Wärmedämmschicht in der Führungsbandnut angeordnet, so wird damit in vorteilhafter Weise erreicht, dass sich das Verfahren auch dann anwenden lässt, wenn ein Erwärmen des Geschosses aus irgendwelchen Gründen nicht erwünscht ist. Als Material für die Wärmedämmschicht wird zweckmässigerweise eines mit guten Gleiteigenschaften, beispielsweise Polytetrafluoräthylen, verwendet, um das Durchrutschen des Führungsbandes zu unterstützen.

Das flügelstabilisierte Geschoss gemäss der Erfindung zeichnet sich somit durch ein als einstückiges Kunststoffband ausgebildetes Führungsband aus, das direkt in die Führungsbandnut eingespritzt und durch einen Spalt vom Geschosskörper getrennt ist. Zweckmässig besteht das Führungsband aus einem Material, das bei der Abkühlung im Bereich der Glastemperatur bei amorphen Werkstoffen oder im Bereich der Kristallbildungstemperatur bei teilkristallinen Werkstoffen stark schwindet. Ein geeignetes Material ist beispielsweise ein Polyamid.

Die Erfindung wird nachstehend anhand der Beschreibung von Ausführungsbeispielen und unter Bezugnahme auf die beiliegende Zeichnung näher erläutert. Die Zeichnung zeigt in

Fig. 1 einen schematischen Querschnitt durch eine aus Spritzgiesswerkzeug und Geschoss bestehende Anordnung zur Erläuterung des erfindungsgemässen Verfahrens;

Fig. 2 einen schematischen Längsschnitt durch ein Geschoss mit durchrutschendem Führungsband und in

Fig. 3 eine der Fig. 2 ähnliche Darstellung in Form eines Teillängsschnitts einer weiteren Ausführungsform.

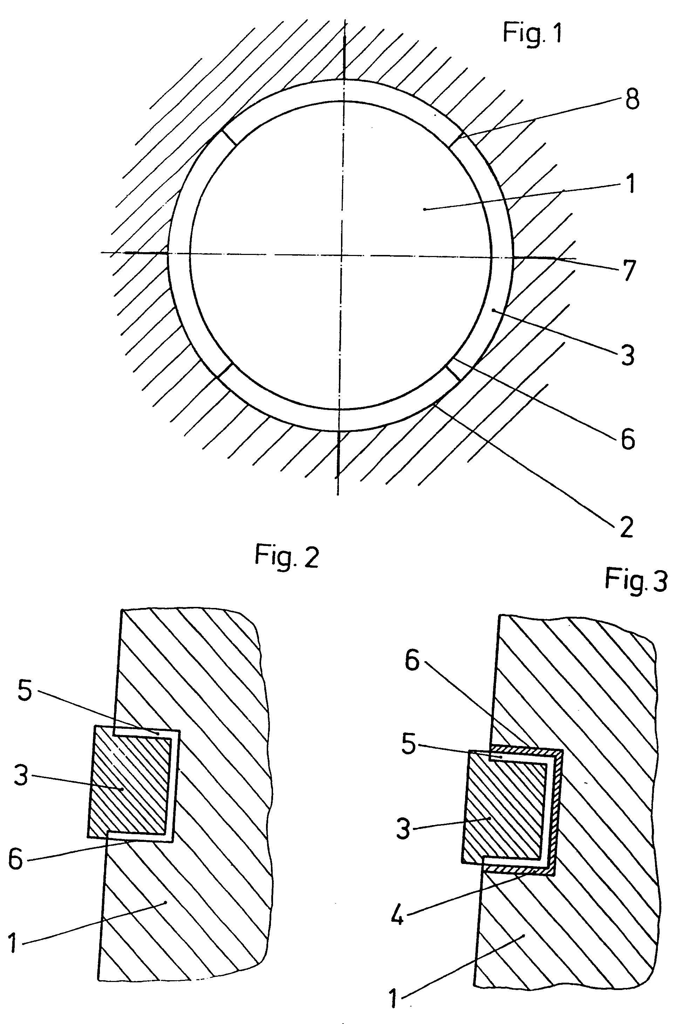

Zur Durchführung des neuartigen Verfahrens zur Herstellung von durchrutschenden Führungsbändern wird zunächst der Geschosskörper 1 an der oder den entsprechenden Stellen mit einer Führungsbandnut 6 versehen, die dann ein Führungsband 3 aufnehmen soll. Zu diesem Zweck wird der Geschosskörper 1 in der in Fig. 1 angedeuteten Weise in ein Spritzgiesswerkzeug 2 eingespannt, wobei das Spritzgiesswerkzeug 2 mit der Führungsbandnut 6 einen Ringraum bildet, in den das Kunststoffmaterial als Führungsband-Werkstoff direkt eingespritzt wird. Dieses Einspritzen kann durch eine Vielzahl von gleichmässig über den Umfang des Spritzgiesswerkzeuges 2 verteilten Punktanschnitten 7, welche durch radial verlaufende Linien in Fig. 1 angedeutet sind, erfolgen.

Auf diese Weise entsteht im Inneren des Ringraumes zwischen Führungsbandnut 6 und Spritzgiesswerkzeug 2 ein einstückiges Führungsband 3. Nach dem Füllvorgang des Spritzgiesswerkzeuges 2 und dem Druckaufbau versiegeln die Punktanschnitte 7 sehr schnell, so dass dann kein Material mehr in das Spritzgiesswerkzeug 2 fliessen kann. Aufgrund der Vielzahl von Punktanschnitten 7 erhält man bei gefülltem Ringraum zwischen jeweils zwei Punktanschnitten 7 eine in Fig. 1 mit 8 bezeichnete Stelle, die eine Bindenaht darstellt, an der das Kunststoffmaterial des Führungsbandes 3 zusammenfliesst.

Von Wichtigkeit ist in diesem Zusammenhang, dass diese Stellen der Bindenähte 8 zwar die gleiche geometrische Form wie die übrigen Bereiche des Führungsbandes 3 besitzen, jedoch eine geringere mechanische Festigkeit aufweisen. Damit lassen sich die Bindenähte 8 als gezielt beeinflussbare Sollbruchstellen für das fertige Führungsband 3 verwenden, so dass sich das Führungsband 3 vom Geschosskörper 1 abtrennen lässt, sobald das Geschoss das Geschützrohr verlassen hat.

Wenn beim vorliegenden Ausführungsbeispiel acht derartige Punktanschnitte 7 sowie acht solche Bindenähte 8 vorgesehen sind, so ist dieser Wert selbstverständlich nur beispielhaft aufzufassen und kann den jeweiligen Gegebenheiten entsprechend geändert werden. Es ist dabei lediglich darauf zu achten, dass die im Einzelfall verwendeten Punktanschnitte gleichmässig über den Umfang des Spritzgiesswerkzeugs verteilt angeordnet sind.

Um nun die durchrutschenden Führungsbänder auszubilden, wird ein entsprechender Temperaturgradient zwischen dem Geschosskörper 1 und dem Spritzgiesswerkzeug 2 eingestellt, so dass das Spritzgiesswerkzeug 2 wesentlich kälter als der Geschosskörper 1 ist. Dieser Temperaturgradient wird für eine ausreichend lange Zeit aufrechterhalten, um eine gezielte Abkühlung und Verfestigung des Führungsbandes 3 zu erreichen. Die Ausbildung des Temperaturgradienten erfolgt in einfacher Weise dadurch, dass der Geschosskörper 1 erwärmt und/oder das Spritzgiesswerkzeug gekühlt wird, wobei jedoch die spezielle Ausbildung des Geschosses hinsichtlich seines Aufbaus zu beachten ist, da dieser gegebenenfalls Grenzen für die Erwärmung setzt oder den Wegfall der Erwärmung aus nachstehend näher angegebenen Gründen erforderlich macht, wobei eine entsprechende Kühlung des Spritzgiesswerkzeuges 2 dann für den erforderlichen Temperaturgradienten sorgt.

Dieser Temperaturgradient sorgt dafür, dass das aus Kunststoff bestehende Führungsband 3 vorwiegend an der Oberfläche des Spritzgiesswerkzeuges 2 abkühlt, wobei diese Temperaturverringerung zu einer beträchtlichen Verringerung des spezifischen Volumens des Führungsbandes 3 führt. Es ist einsichtig, dass diese Verringerung des spezifischen Volumens pro Zeiteinheit dort am grössten ist, wo das Material am schnellsten abgekühlt wird, nämlich in der Nähe der Obefläche des Spritzgiesswerkzeugs 2.

Bedingt durch die Abkühlung des Kunststoffmaterials im Ringraum und die damit einhergehende Abnahme des spezifischen Volumens sinkt auch der Druck im Spritzgiesswerkzeug 2, und zwar vornehmlich dort, wo die grösste Abkühlungsgeschwindigkeit anzutreffen ist. Gleichzeitig mit der Ausbildung eines im wesentlichen zylindersymmetrischen Abkühlungsgeschwindigkeitsfeldes, das in radialer Richtung abnimmt, entsteht ein entsprechendes, ebenfalls im wesentlichen zylindersymmetrisches Druckgradientenfeld innerhalb des Kunststoffmaterials, was zur Folge hat, dass ein Materialtransport innerhalb des Ringraumes zur kältesten Stelle hin stattfindet, solange dieses Kunststoffmaterial noch nicht erstarrt ist.

Wenn dieser Druck innerhalb des Ringraumes auf Umgebungsdruck abgefallen ist, so hat der durch den angegebenen Mechanismus ausgelöste Materialtransport die Wirkung, dass sich das Kunststoffmaterial im radial äusseren Bereich des Ringraumes, vorwiegend in radialer Richtung, zusammenzieht und sich dabei gleichzeitig von der, radial gesehen, inneren Wand des Ringraumes, also seiner wärmsten Stelle, abhebt. Bei der vorliegenden Anordnung ist diese wärmste Stelle der Geschosskörper 1 bzw. die in ihm ausgebildete Führungsbandnut 6. Durch diesen Effekt des Abhebens des Kunststoffmaterials von der Geschossoberfläche wird jedoch der Wärmeübergang zwischen Kunststoff einerseits und Geschosskörper andererseits noch schlechter, so dass der Wärmestrom vom Kunststoff des Führungsbandes 3 zum Geschosskörper 1 weiter absinkt.

Das bedeutet weiterhin, dass die Wärmemenge, die in dem radial innen gelegenen Bereich des Führungsbandes 3 enthalten ist, im wesentlichen durch den Körper des Führungsbandes 3 hindurch nach aussen in das kalt gehaltene Spritzgiesswerkzeug 2 fliessen und von diesem abgeführt wird. Dieses Phänomen führt jedoch zu dem weiteren Vorteil, dass diejenigen Oberflächen des Führungsbandes 3, die keinen Wandkontakt mit der Führungsbandnut 6 mehr besitzen, sehr langsam abkühlen. Dadurch ergibt sich eine sehr gute, glatte Oberfläche mit einer geringen Rauhtiefe, was das Durchrutschen des Führungsbandes 3 auf dem Geschosskörper 1 im Betrieb unterstützt.

Die vorstehende Beschreibung zeigt, dass es wichtig ist, für die Einstellung und Aufrechterhaltung des Temperaturgradienten zwischen Geschosskörper 1 einerseits und Spritzgiesswerkzeug 2 andererseits Sorge zu tragen. Aus diesem Grunde ist es zweckmässig, beim Einspannen des Geschosskörpers 1 im Spritzgiesswerkzeug 2 darauf zu achten, dass nur ein möglichst kleiner Wärmestrom vom Geschoss zum Spritzgiesswerkzeug fliessen kann. Dies kann beispielsweise dadurch geschehen, dass das Geschoss und das Spritzgiesswerkzeug nur über kleine Kontaktflächen miteinander in Berührung stehen. Eine andere Möglichkeit besteht darin, zur Halterung des Geschosses eine Wärmedämmschicht zwischen dem Geschoss und dem Spritzgiesswerkzeug vorzusehen.

Fig. 2 zeigt in schematischer Darstellung eine mit dem oben beschriebenen Verfahren erhaltene Anordnung. Man erkennt einen Geschosskörper 1 mit einer Führungsbandnut 6 sowie ein Führungsband 3, das teilweise radial nach aussen aus der Führungsbandnut 6 vorsteht. Zwischen Führungsband 3 und der Führungsbandnut 6 hat sich ein übertrieben dargestellter Spalt 5 ausgebildet, der ein Durchrutschen des Führungsbandes ermöglicht.

Aus verschiedenen Gründen kann es wünschenswert sein, zwar mit dem oben angegebenen Temperaturgradienten zwischen Geschosskörper 1 und Spritzgiesswerkzeug 2 zu arbeiten, jedoch den Temperaturgradienten nicht zu gross auszubilden bzw. das Geschoss selbst nicht oder nur wenig zu erwärmen. Dies kann beispielsweise dann der Fall sein, wenn es sich um ein fertiges Hohlladungsgeschoss oder ein Geschoss mit einer Leuchtspurpille handelt oder wenn Geschosse mit ausgehärteten Al-Legierungen verwendet werden, die eine maximale Temperatur von etwa 135°C zulassen.

In solchen Fällen wird man zweckmässigerweise eine Wärmedämmschicht in der Führungsbandnut vorsehen, die in Fig. 3 mit dem Bezugszeichen 4 angedeutet ist. Diese Wärmedämmschicht 4 kann beispielsweise durch Spritzen oder Lackieren auf die Oberfläche der Führungsbandnut 6 aufgebracht werden, oder aber durch Einlegen eines Materialstückes in die Führungsbandnut 6. Dabei verwendet man zweckmässigerweise ein Material mit guten Gleiteigenschaften für die Wärmedämmschicht 4, beispielsweise Polytetrafluoräthylen.

Die Durchführung des Verfahrens selbst mit dem Einspritzen des Kunststoffes in den Ringraum erfolgt in der oben beschriebenen Weise, wobei wiederum ein grosser Wärmestrom vom Kunststoff des Führungsbandes 3 zum Spritzgiesswerkzeug 2 hin erfolgt, während nur ein kleiner Wärmestrom aus dem Kunststoff des Führungsbandes 3 zum Geschoss hin erfolgt und dadurch die bereits erläuterten Effekte eintreten.

Selbstverständlich kann eine derartige Wärmedämmschicht 4 auch dann in der Führungsbandnut 6 vorgesehen werden, wenn keine Vorsichtsmassnahmen gegenüber dem Geschoss zu ergreifen sind, um auf diese Weise den Wärmestrom aus dem eingespritzten Kunststoffmaterial in das Spritzgiesswerkzeug zu unterstützen.

Mit dem vorstehend beschriebenen Verfahren erhält man somit in ebenso einfacher wie wirkungsvoller Weise Geschosse mit durchrutschenden, einstückigen Führungsbändern, ohne dass komplizierte und schwer zu beherrschende Montagetechniken anzuwenden sind, die ein kontrolliertes Dehnen des Führungsbandes und ein Schrumpfen des Führungsbandes in die Führungsbandnut durch gesteuerte Relaxation erfordern. Die Verwendung von teuren Geschosstypen mit einer zusätzlichen Trennebene in Höhe der Führungsbandnut ist ebensowenig erforderlich wie die Einhaltung von grossen Massgenauigkeiten. Vielmehr können die Abmessungen des Spaltes 6 zwischen dem Führungsband 3 und dem Geschosskörper 1 durch geeignete Abstimmung der Verfahrensparameter, beispielsweise die Wahl des Kunststoffmaterials, das Volumen des Ringraumes und die Ausbildung des Temperaturgradienten abgestimmt werden.

In einem weiteren Ausführungsbeispiel der Erfindung besteht das Führungsband 3 aus einem faserverstärkten Kunststoff; dadurch kann ein Ablösen des Führungsbandes 3 vom Geschoss während des Flugs verhindert werden.

Eine Ablösung des Führungsbandes 3 kann in einem weiteren Ausführungsbeispiel der Erfindung auch dadurch verhindert werden, dass die Führungsbandnut 6 mit Hinterschneidungen versehen ist.

**Patentansprüche**

1. Verfahren zur Herstellung von durchrutschenden Führungsbändern (3) aus verformbarem Werkstoff für flügelstabilisierte Geschosse (1), bei denen das Führungsband (3) in einer Führungsbandnut (6) angeordnet wird, gekennzeichnet durch folgende Verfahrensschritte:
– Einspannen des Geschosses (1) in ein Spritzgiesswerkzeug (2),

– direktes Einspritzen von Kunststoff als Führungsband-Werkstoff in den von der Führungsbandnut (6) und dem Spritzgiesswerkzeug (2) gebildeten Ringraum durch einen Punktanschnitt (7) oder mehrere gleichmässig über den Umfang verteilte Punktanschnitte (7) und

– Einstellen und Aufrechterhalten eines Temperaturgradienten zwischen Geschoss (1) und Spritzgiesswerkzeug (2), so dass das Spritzgiesswerkzeug (2) wesentlich kälter als das Geschoss (1) ist.

2. Verfahren nach Anspruch 1, dadurch gekennzeichnet, dass das Geschoss (1) mit kleinen Kontaktflächen in das Spritzgiesswerkzeug (2) eingespannt wird.

3. Verfahren nach Anspruch 1, dadurch gekennzeichnet, dass zur Halterung des Geschosses (1) eine Wärmedämmschicht (4) zwischen Geschoss (1) und Spritzgiesswerkzeug (2) angeordnet wird.

4. Verfahren nach einem der Ansprüche 1 bis 3, dadurch gekennzeichnet, dass vor dem Einspritzen des Kunststoffes in den Ringraum zwischen Spritzgiesswerkzeug (2) und Führungsbandnut (6) eine Wärmedämmschicht (4) in der Führungsbandnut (6) angeordnet wird.

5. Verfahren nach Anspruch 4, dadurch gekennzeichnet, dass als Wärmedämmschicht (4) ein Material mit guten Gleiteigenschaften, z.B. Polytetrafluoräthylen, verwendet wird.

6. Flügelstabilisiertes Geschoss für glatte und gezogene Rohre mit einem durchrutschenden Führungsband (3) aus verformbarem Werkstoff, dadurch gekennzeichnet, dass das Führungsband (3) als einstückiges Kunststoffband ausgebildet ist, das direkt in eine Führungsbandnut (6) eingespritzt und durch einen Spalt (5) vom Geschosskörper (1) getrennt ist.

7. Flügelstabilisiertes Geschoss nach Anspruch 6, dadurch gekennzeichnet, dass das Führungsband (3) aus einem Material besteht, das bei der Abkühlung im Bereich der Glastemperatur bei amorphen Werkstoffen oder im Bereich der Kristallbildungstemperatur bei teilkristallinen Werkstoffen stark schwindet.

8. Flügelstabilisiertes Geschoss nach Anspruch 6 oder 7, dadurch gekennzeichnet, dass zwischen dem Führungsband (3) und der Führungsbandnut (6) eine Wärmedämmschicht (4) angeordnet ist, die auf die Oberfläche der Führungsbandnut (6) aufgebracht ist.

9. Flügelstabilisiertes Geschoss nach Anspruch 8, dadurch gekennzeichnet, dass die Wärmedämmschicht (4) aus einem Material mit guten Gleiteigenschaften, z.B. Polytetrafluoräthylen, besteht.

10. Flügelstabilisiertes Geschoss nach einem der Ansprüche 6 bis 9, dadurch gekennzeichnet, dass das Führungsband (3) definierte Sollbruchstellen in Form von Bindenähten (8) des Kunststoffmaterials aufweist, die in radialer Richtung des Geschosses verlaufen.

11. Verfahren nach den Ansprüchen 1 bis 5, dadurch gekennzeichnet, dass für das Führungsband (3) ein faserverstärkter Kunststoff verwendet wird, um das Ablösen des Führungsbandes (3) vom Geschoss im Flug zu vermeiden.

12. Verfahren nach den Ansprüchen 1 bis 5, dadurch gekennzeichnet, dass die Führungsbandnut (6) Hinterschneidungen aufweist, um ein Ablösen des Führungsbandes (3) vom Geschoss im Flug zu vermeiden.

13. Flügelstabilisiertes Geschoss nach einem der Ansprüche 6 bis 9, dadurch gekennzeichnet, dass das Führungsband (3) aus einem faserverstärkten Kunststoff besteht.

14. Flügelstabilisiertes Geschoss nach einem der Ansprüche 6 bis 9, dadurch gekennzeichnet, dass die Führungsbandnut (6) Hinterschneidungen aufweist, um ein Ablösen des Führungsbandes (3) vom Geschoss im Flug zu vermeiden.

15. Flügelstabilisiertes Geschoss nach Anspruch 6, dadurch gekennzeichnet, dass das Führungsband (3) aus einem Polyamid besteht.

**Claims**

1. Method for the production of slipping guide rings (3) of deformable material and for fin stabilized projectiles (1) wherein the guide ring (3) is located in a ring groove (6), characterized by the following steps in the method:

– clamping the projectile (1) in an injection moulding tool (2),

– injecting a plastics material to form a guide ring directly into the annular cavity defined between the guide ring groove (6) and the injection moulding tool (2), the injection being through a punctiform slit (7) or a number of punctiform slits (7) evenly distributed around the periphery, and

– setting and maintaining a temperature gradient between the projectile (1) and the injection moulding tool (2), so that the injection moulding tool (2) is substantially colder than the projectile (1).

2. Method in accordance with Claim 1, characterized by the projectile (1) being clamped by small contact areas in the injection moulding tool (2).

3. Method in accordance with Claim 1, characterized by the projectile (1) being secured by a heat insulating layer (4) provided between the projectile (1) and the injection moulding tool (2).

4. Method in accordance with any one of the Claims 1 to 3, characterized by the fact that before the injection of the plastics material into the annular chamber between the injection moulding tool (2) and the guide ring groove (6) a heat insulating layer (4) is provided in the said guide ring groove (6).

5. Method in accordance with Claim 4, characterized by the use of a material with good antifriction properties, for example polytetrafluorethylene, as the heat insulating layer.

6. A fin stabilized projectile for smooth and rifled barrels, with a slipping guide ring (3) of a deformable material, characterized by the guide ring (3) being a band of plastics material which is made in one piece and which has been injection directly into a guide band groove (6) and separated from the body of the projectile (1) by a clearance gap (5).

7. A fin stabilized projectile in accordance with Claim 6, characterized by the guide band ring (3) comprising a material which undergoes considerable shrinkage on cooling in the setting temperature range in the case of amorphous materials, or in the crystallisation point temperature range in the case of part crystalline substances.

8. A fin stabilized projectile in accordance with Claim 6 or 7, characterized by a heat insulating layer (4), which is applied to the surface of the guide ring groove (6), provided between the guide ring (3) and the guide ring groove (6).

9. A fin stabilized projectile in accordance with Claim 8, characterized by a heat insulating layer (4) consisting of a material with good antifriction properties, such as polytetrafluorethylene.

10. A fin stabilized projectile in accordance with any one of Claims 6 to 9, characterized by the guide ring (3) having defined preset weakened points in the form of joint seams (8) of the plastics material, which extend in a direction radial to the projectile.

11. Method in accordance with any one of Claims 1 to 5, characterized by the guide ring (3) being of a fibre-reinforced plastic to provide that the guide ring (3) will not become detached from the projectile during flight.

12. Method in accordance with any one of Claims 1 to 5, characterized by the guide ring groove (6) having rebated parts to prevent the guide ring (3) from becoming detached from the projectile during flight.

13. A fin stabilized projectile in accordance with any one of Claims 6 to 9, characterized by the guide ring (3) consisting of a fibre-reinforced plastics material.

14. A fin stabilized projectile in accordance with any one of Claims 6 to 9, characterized by the guide ring groove (6) having rebated parts to prevent the guide ring (3) from becoming detached from the projectile during the flight.

15. A fin stabilized projectile in accordance with Claim 6, characterized by the guide ring (3) being a polyamide material.

## Revendications

1. Procédé de fabrication de bandes de guidage à glissement (3), constituées en un matériau déformable et destinées à des projectiles stabilisés par empennage (1), dans lesquels la bande de guidage (3) est disposée dans une rainure à bande de guidage (6), caractérisé par les étapes suivantes:
   – le serrage du projectile (1) dans un outil de coulage par injection (2),
   – l'injection directe du matériau synthétique constituant le matériau de la bande de guidage dans l'enceinte annulaire formée par la rainure à bande de guidage (6) et l'outil de coulage par injection (2) par l'intermédiaire d'un point d'injection (7) ou de plusieurs points d'injection (7) répartis sur la périphérie, et

   – le réglage et le maintien d'un gradient de température entre le projectile (1) et l'outil de coulage par injection (2), de manière que l'outil de coulage par injection (2) soit sensiblement plus froid que le projectile (1).

2. Procédé selon la revendication 1, caractérisé en ce que le projectile (1) est serré dans l'outil de coulage par injection (2) par de petites surfaces de contact.

3. Procédé selon la revendication 1, caractérisé en ce qu'une couche thermiquement isolante (4) est disposée entre le projectile (1) et l'outil de coulage par injection (2) pour maintenir le projectile.

4. Procédé selon l'une des revendications 1 à 3, caractérisé en ce qu'une couche thermiquement isolante (4) est disposée dans la rainure à bande de guidage (6) avant l'injection du matériau synthétique dans l'enceinte annulaire comprise entre l'outil de coulage par injection (2) et la rainure à bande de guidage (6).

5. Procédé selon la revendication 4, caractérisé en ce qu'on utilise pour former la couche thermiquement isolante (4) un matériau présentant de bonnes propriétés de glissement, tel que du polytétrafluoréthylène.

6. Projectile stabilisé par empennage pour canons lisses et rayés, comprenant une bande de guidage à glissement (3) en un matériau déformable, caractérisé en ce que la bande de guidage (3) est constituée sous forme d'une bande en matériau synthétique en une seule pièce, qui est coulée directement dans une rainure à bande de guidage (6) et qui est séparée du corps (1) du projectile par un interstice (5).

7. Projectile stabilisé par empennage selon la revendication 6, caractérisé en ce que la bande de guidage (3) est réalisée en un matériau qui se rétracte fortement, lors du refroidissement, dans la zone de la température du verre lorsqu'il s'agit de matériaux amorphes, et dans la zone de la température de la formation de cristaux quand il s'agit de matériaux partiellement cristallins.

8. Projectile stabilisé par empennage selon la revendication 6 ou 7, caractérisé en ce qu'entre la bande de guidage (3) et la rainure à bande de guidage (6) est prévue une couche thermiquement isolante (4), disposée sur la surface de la rainure à bande isolante (6).

9. Projectile stabilisé par empennage selon la revendication 8, caractérisé en ce que la couche thermiquement isolante (4) est réalisée en un matériau présentant de bonnes propriétés de glissement tel que du polytétrafluoréthylène.

10. Projectile stabilisé par empennage selon l'une des revendications 6 à 9, caractérisé en ce que la bande de guidage (3) comprend des positions de rupture de consigne définies sous la forme de joints collés (8) du matériau synthétique, orientés en direction radiale du projectile.

11. Procédé selon les revendications 1 à 5, caractérisé en ce qu'on utilise pour réaliser la bande de guidage (3) un matériau renforcé par des fibres, pour éviter le dégagement de la bande de guidage (3) du projectile en cours de vol.

12. Procédé selon les revendications 1 à 5, caractérisé en ce que la rainure à bande de guidage (6) comprend des contre-dépouilles pour éviter le détachement de la bande de guidage (3) du projectile en cours de vol.

13. Projectile stabilisé par empennage selon l'une des revendications 6 à 9, caractérisé en ce que la bande de guidage (3) est constituée en un matériau renforcé par des fibres.

14. Projectile stabilisé par empennage selon l'une des revendications 6 à 9, caractérisé en ce que la rainure à bande de guidage (6) comprend des contre-dépouilles pour éviter le détachement de la bande de guidage (3) du projectile en cours de vol.

15. Projectile stabilisé par empennage selon la revendication 6, caractérisé en ce que la bande de guidage (3) est réalisée en un polyamide.

Fig. 1

8

1

7

3

6

2

Fig. 2

Fig. 3

5

3

6

1

6

5

3

4

1